# EUROPÄISCHE PATENTSCHRIFT

(11) **EP 0 703 035 B1**
(45) Veröffentlichungstag und Bekanntmachung des Hinweises auf die Patenterteilung: **11.11.1998**
(21) Anmeldenummer: 95110306.8
(22) Anmeldetag: 30.06.1995
(51) Int. Cl.: B23H 1/02, B23H 7/04

(54) **Verfahren und Impulsgenerator zum elektroerosiven Bearbeiten von Werkstücken**
Method and pulse generator for electroerosion machining
Méthode et générateur d'impulsions pour usinage par électroérosion

(30) Priorität: 15.09.1994 DE 4432916
(43) Veröffentlichungstag der Anmeldung: 27.03.1996
(73) Patentinhaber: AGIE SA, 6616 Losone (CH)
(72) Erfinder: Derighetti, René, CH-6616 Losone (CH); Dresti, Silvano, I-28052 Cannobio (IT)
(74) Vertreter: von Samson-Himmelstjerna, Friedrich R., Dipl.-Phys.

(56) Entgegenhaltungen:
- EP-A- 0 027 041
- EP-A- 0 185 101
- DE-A- 2 214 218
- FR-A- 2 053 663
- PATENT ABSTRACTS OF JAPAN vol. 016 no. 132 (M-1229) ,3.April 1992 & JP-A-03 294116 (MAKINO MILLING MACH CO LTD) 25.Dezember 1991,

## Beschreibung

Die Erfindung befaßt sich mit einem Verfahren zum elektroerosiven Bearbeiten von Werkstücken mittels Impulsen wechselnder Stromrichtung bzw. Polarität sowie mit einem Impulsgenerator zur Durchführung eines derartigen Verfahrens.

Die elektroerosive Bearbeitung beruht bekanntlich auf einer Funkenentladung, die zwischen einer Bearbeitungselektrode und einer Werkstückelektrode - nachfolgend einfach als Elektrode und Werkstück bezeichnet - gezündet wird. Die Elektrode und das Werkstück sind dabei in einer isolierenden Flüssigkeit, dem Dielektrikum, eingetaucht. Die notwendige Energie zur Zündung und Aufrechterhaltung der Entladung wird in der Regel von einem Leistungs-Impulsgenerator geliefert.

Die Stromrichtung bzw. die Polarität der am Werkstück und an der Elektrode wirkenden (Bearbeitungs)impulse hängt vorwiegend von den gewünschten Erosionsergebnissen ab, wie auch vom Elektroden- und Werkstückmaterial, vom verwendeten Dielektrikum, etc.. Daher wird für die Bestimmung der Polarität das Verhalten des Abtrages am Werkstück und an der Elektrode als Funktion der zeitlichen Impulsdauer - nachfolgend als "Impulsbreite" bezeichnet - im Einzelfall herangezogen.

Beim herkömmlichen Senkerodieren mittels Stromimpulsen konstanter Stromrichtung wird häufig das Werkstück als Kathode und die Elektrode als Anode gewählt, so daß unter Berücksichtigung des Resolidisationseffektes an der Elektrode der unerwünschte Abtrag an der Elektrode (Elektrodenverschleiß) möglichst klein gehalten wird. Dagegen spielt der Elektrodenverschleiß beim Drahterodieren eine untergeordnete Rolle, da die Drahtelektrode ständig erneuert wird. Beim herkömmlichen Drahterodieren mittels Stromimpulsen konstanter Stromrichtung wird in erster Linie ein maximaler Abtrag am Werkstück angestrebt. Das Werkstück ist dabei an der Anode, die Elektrode an der Kathode des Impulsgenerators angeschlossen.

Aus der Druckschrift CH 536 166 ist auch ein Verfahren zum elektroerosiven Bearbeiten von Werkstücken mittels Stromimpulsen wechselner Stromrichtung bekannt. Durch Betätigen von Schaltmitteln, die im Versorgungszweig der Bearbeitungseinheit angeordnet sind, wird die Stromrichtung zwischen dem Werkstück und der Elektrode während der Dauer eines Stromimpulses umgekehrt.

Ferner beschreibt die FR-A 2 053 663 ein Verfahren zum elektroerosiven Bearbeiten von Werkstücken, bei welchem die aus Werkstück und Elektrode bestehende Bearbeitungseinheit in einem einfachen Schwingkreis angeordnet ist. Die Bearbeitungseinheit wird dort mit modulierten Strom- bzw. Spannungsimpulspaketen beaufschlagt, die jedoch durch Impulspausen voneinander getrennt sind. Zum Beispiel werden bipolare Impulszüge verwendet, bei welchen die Stromamplitude sukzessive bis zum Wert Null abklingt, so daß kein weiterer Impulszug unmittelbar auf einem Impulszug folgt.

Die EP-A 0 185 101 befaßt sich mit einem Generator für eine Elektroerosionsmaschine, bei welchem durch wiederholte Entladung eines Kondensators eine elektrische Entladung über dem Arbeitsspalt gezündet wird. Durch den Einbau von Schaltelementen kann die Dauer und die Amplitude der Entladungsimpulse gesteuert werden. Dabei ist der Entladungskondensator parallel zu der aus Elektrode und Werkstück gebildeten Bearbeitungseinheit geschaltet und wird nur mit einer Polarität(srichtung) aufgeladen. Der Bearbeitungsimpuls (der zum Materialabtrag am Werkstück führt) ist ebenfalls nur monopolar. Zwischen zwei Bearbeitungsimpulsen liegt eine Pause zur erneuten Aufladung des Kondensators. Insbesondere findet in den Bereichen negativer Spannung kein Erosionsabtrag statt.

Auch die EP-A 0 027 041 verwendet bipolare Impulspaare, jedoch mit einem Triggerimpuls (also keinem Bearbeitungsimpuls) in der einen Stromrichtung und einem darauffolgenden Bearbeitungsimpuls in der anderen Stromrichtung. Zwischen den darauffolgenden Bearbeitungsimpulsen in der anderen Stromrichtung ist die im Stand der Technik übliche Impulspause eingeschaltet.

Wesentlich für alle obigen Erosionsverfahren ist, daß zwischen aufeinanderfolgenden (Bearbeitungs)impulsen eine Impulspause notwendig ist, um den zwischen dem Werkstück und der Elektrode aufgebauten Entladungskanal zu entionisieren und dadurch eine Entartung des Erosionsprozesses zu vermeiden. Dabei wird der Strom bzw. die Spannung an der Bearbeitungseinheit auf Null gesetzt - während der Impulspause besteht also zwischen dem Werkstück und der Elektrode keine Potentialdifferenz. Die Impulspause muß bei den bekannten Verfahren mindestens so lange dauern, daß über die Entionisierung der Leitwert des Entladekanals soweit herabgesetzt wird, daß eine Neuentladung an einem neuen Ort erfolgen kann. Zu kurze Impulspausen führen zu einer unerwünschten Konzentration von Entladungen an der gleichen Stelle und ggf. zu einer Entartung des Erosionsprozesses.

Die Impulspause zwischen aufeinanderfolgenden Impulsen stellt jedoch einen unerwünschten Zeitverlust dar, der sich ungünstig auf die Wirtschaftlichkeit bekannter Verfahren zum elektroerosiven Bearbeiten von Werkstücken auswirkt.

Die Erfindung möchte hier Abhilfe schaffen.

Dieses Ziel erreicht die Erfindung durch die Gegenstände der Ansprüche 1 und 11. Danach wird bei einem gattungsgemäßen Verfahren die Impulsform aufeinanderfolgender Impulse unterschiedlicher Stromrichtung bzw. Polarität so optimiert bzw. gewählt, daß die Impulspause bis auf den Wert Null reduziert werden kann. Bei einem Impulsgenerator zur Erzeugung von Impulsen wechselnder Stromrichtung bzw. Polarität für eine Vorrichtung zum elektroerosiven Bearbeiten von Werkstücken ist eine Steuereinrichtung vorgesehen zur Steuerung der Impulsform aufeinanderfolgender Impulse unterschiedlicher Stromrichtung bzw. Polarität, derart, daß die Impulspause bis auf den Wert Null reduzierbar ist.

Dieser Vorschlag beruht im wesentlichen auf der Erkenntnis, daß beim Elektroerodieren mittels aufeinanderfolgender Impulse die Impulsparameter, wie die Stromrichtung bzw. die Polarität sowie die Impulsbreite und/oder die Impulsamplitude so gewählt werden können, daß die Impulspause zwischen aufeinanderfolgenden Impulsen ohne Entartung des Erosionsprozesse bis auf den Wert Null reduziert werden kann. Bei bekannten Verfahren war die Impulspause dagegen immer zwingend notwendig, um die Entionisierung des Entladungskanals zwischen zwei Impulsen zu gewährleisten.

Der erfindungsgemäße Erosionsbereich der bis hin zu Null reduzierten Impulspausen hat gleichwohl die erwünschte werkstoffabtragende Wirkung an den Fußpunkten des Entladungskanals. Darüberhinaus hat das erfindungsgemäße Verfahren gegenüber bekannter Erosionsverfahren mit Impulspausen folgende Vorteile:
- Steigerung der Abtragsrate um mehr als 50 % und damit einhergehende erhebliche Zeitersparnis, da die "abtraglose" Impulspause bis zu Null hin reduziert wird;
- Vermeidung von Korrosions- und/oder Elektrolyseerscheinungen an der Oberfläche des Werkstücks - durch die unmittelbare Abfolge von Impulsen unterschiedlicher Stromrichtung;
- Erzielung von extrem "feinen" Oberflächen: die sog. maximale Rauheit (Rmax) wird erheblich kleiner, da dank des erfindungsgemäßen Verfahrens örtliche Konzentrationen von Entladungen vermieden werden. Im Idealfall erfolgt eine neue Entladung immer an einem neuen Ort. Hierdurch wird gewährleistet, daß die elektroerosive Bearbeitung selbsttätig eine Bearbeitungszone am Werkstück gleichmäßig erfaßt; und
- eine Erhöhung des Abtrages ohne gleichzeitige (unerwünschte Erhöhung der Oberflächerauheit.

Bei kleinen und mittleren Impulsströmen kann die Impulsform aufeinanderfolgender Impulse unterschiedlicher Stromrichtung so optimiert werden, daß die Impulspause vollständig entfallen kann. Erst bei extrem hohen Impulsströmen kann es wegen der damit einhergehenden starken Ionisierung des Entladungskanals sinnvoll sein, eine Impulspause zwischen den Impulsen unterschieldicher Stromrichtung vorzusehen. Diese Impulspause ist aber erheblich kürzer als diejenige, welche bei Impulsen konstanter Stromrichtung notwendig wäre.

Somit geht der erfindungsgemäße Erosionsbereich von den bekannten Erosionsverfahren mit Impulspausen aus und erschließt den Bereich zu immer kleiner werdenden Impulspausen - bis hin zur Erosion ohne Impulspause.

Nach der Erfindung wird die Impulsbreite aufeinanderfolgender Impulse unterschiedlicher Stromrichtung mindestens so kurz gewählt wird, daß auf einen Impuls unmittelbar ein weiterer Impuls ohne Entartungsgefahr folgen kann. Mit anderen Worten existiert eine maximal zulässige Impulsbreite (tmax) aufeinanderfolgender Impulse, unterhalb derer ohne Impulspause erodiert werden kann. Der Erosionsstrom wird dann überwiegend vom Elektronenstrom verursacht, der Ionenbeitrag ist vernachlässigbar. Die Entionisierung des Entladungskanals kann dann erheblich schneller stattfinden als im Falle von Elektroerosion mittels Impulsen einheitlicher Stromrichtung. Es besteht somit keine Gefahr der Entartung des Erosionsprozesses.

Zur Bestimmung der maximal zulässigen Impulsbreite (tmax) weist der erfindungsgemäße Impulsgenerator einen Regelkreis auf. Darin wird - bei vorgegebener Stromstärke, Zusammensetzung des Dielektrikums sowie des Elektroden- bzw. Werkstückmaterials - die Impulsbreite der Impulse schrittweise verkürzt, bis ohne Impulspause gearbeitet werden kann. Als Kriterium hierfür dient die Neigung des Erosionsprozesses zur Entartung: dabei wird die Erosionsspannung an der Bearbeitungseinheit auf ein etwaiges Abfallen unterhalb eines kritischen Wertes und/oder der Zündvorgang auf ein etwaiges Ausbleiben der Zündverzögerung hin überwacht. Der Wert von tmax wird mit Hilfe eines Regelkreises bestimmt, der vorzugsweise eine Meßvorrichtung zur Überwachung des Zünd- und Entladungsvorganges an der Bearbeitungseinheit aufweist.

Auf diese Weise ergeben sich je nach spezifischen Erosionsparametern unterschiedliche Werte für die maximal zulässige Impulsbreite. Im allgemeinen sind die maximal zulässigen Impulsbreiten geringer als die Impulsbreiten der monopolaren Bearbeitungsimpulse bekannter Erosionsverfahren. Die maximal zulässige Impulsbreite begrenzt die Frequenz der Bearbeitungsimpulse nach unten hin. Hervorragende Ergebnisse werden mit Frequenzen zwischen 1 und 4 MHz und Impulsströmen zwischen 4 und 8 A erreicht.

Besonders die Kombination aus hohen Impulsströmen mit den gelehrten kurzen aufeinanderfolgenden Impulsen unterschiedlicher Stromrichtung bzw. Polarität eignet sich - neben dem Bearbeiten von feinen Oberflächen - auch zum Bearbeiten von groben Oberflächen, z. B. beim Vorschlichten. Experimentell läßt sich auch feststellen, daß mit steigenden Impulsströmen - und damit einhergehender größerer Oberflächenrauheit - die maximal zulässige Impulsbreite (tmax) der Impulse zunimmt. Daher ist es sinnvoll, bei höheren Impulsströmen eine größere maximal zulässige Impulsbreite (tmax) der Impulse zu wählen.

Nach einer weiteren Variante der Erfindung wird die Impulsbreite (topt) aufeinanderfolgender Impulse - innerhalb eines von tmax nach oben hin begrenzten Bereiches - so gewählt, daß die Summe der Abträge aufeinanderfolgender Impulse am Werkstück maximal und/oder der Elektrodenverschleiß minimal ist oder einen vorgegebenen Wert nicht überschreitet. Entsprechend ist der Regelkreis des erfindungsgemäßen Impulsgenerators vorzugsweise zur automatischen Optimierung der zulässigen Impulsbreite mit Rücksicht auf den maximalen Werkstücksabtrag und/oder den minimalen oder vorgegebenen Elektrodenverschleiß ausgelegt. Auf diese Weise ist die funkenerosive Bearbeitung einfach und flexibel unterschiedlichen Erosionsbedingungen anpaßbar: z.B. ist bei Senkerosion ein minimaler Verschleiß der kostenintensiven Bearbeitungselektroden wünschenswert. Dagegen liegt im Falle der Drahterosion häufig der Schwerpunkt auf der hohen Abtragsleistung am Werkstück und der damit einhergehenden hohen Bearbeitungsgeschwindigkeit.

Bei einer bevorzugten Ausgestaltung der automatischen Optimierung der zulässigen Impulsbreite (topt) wird/werden:
- der Ist-Wert der Erosionsspannung, des Erosionsstromes und/oder der Erosionsgeschwindigkeit (auch Vorschubgeschwindigkeit genannt) an der Bearbeitungseinheit mit einer Meßvorrichtung erfaßt; und
- die Meßsignale in einen der Meßvorrichtung nachgeschalteten Fuzzy-Regler zur automatischen Optimierung der zulässigen Impulsbreite nach den zuvor genannten Kriterien eingespeit.

Für die automatische Optimierung der optimal zulässigen Impulsbreite (topt) aufeinanderfolgender Impulse ist im besonderen Maße die sog. Fuzzy-Logik geeignet, die im Vergleich zur klassischen kontinuierlichen Regelungstechnik schneller zu Lösungen für die Werte von topt führt.

Für eine weitere Automatisierung sorgt die Erfindung dadurch, daß die ermittelten Werte für die maximal zulässige Impulsbreite (tmax) und/oder für die optimal zulässige Impulsbreite (topt) aufeinanderfolgender Impulse als Funktion der spezifischen Erosionsparameter, z.B. Stromstärke, Zusammensetzung des Dielektrikums sowie des Elektroden- und Werkstückmaterials, etc., vorzugsweise in einer Steuereinrichtung, insbesondere einer CNC-Steuerung, gespeichert sind. Diese Werte sind dort z.B. zu Beginn der elektroerosiven Bearbeitung automatisch abrufbar. Dies bedeutet eine erhebliche Vereinfachung des Erosionsverfahrens und eine Verbesserung der Bedienungsfreundlichkeit der Erosionsvorrichtung.

Von großer Bedeutung ist auch die Wahl der konkreten Impulsform aufeinanderfolgender Impulse unterschiedlicher Stromrichtung bzw. Polarität:

Vorzugsweise wird die Bearbeitungseinheit mit aufeinanderfolgenden Gleichstromimpulsen unterschiedlicher Stromrichtung beaufschlagt. Die optimale Impulsbreite (topt) und/oder Impulsamplitude eines "positiven" und eines darauffolgenden "negativen" Impulses ist im allgemeinen nicht gleich. In manchen Anwendungen kann die Impulsbreite und/oder Impulsamplitude aufeinanderfolgender Gleichstromimpulse gleich groß gewählt werden. Im letztgenannten Fall ist ein Impulsgenerator zur Erzeugung derartiger Impulse entsprechend einfacher aufgebaut, da auf eine aufwendige Steuerung der Schaltmittel und/oder auf eine Mehrfachspeisung verzichtet werden kann. Dies gilt ebenfalls für den Einsatz von HF-Impuls-Wechselstromquellen zur Versorgung der Bearbeitungseinheit mit Wechselstromimpulsen.

Bei der Elektroerosion mit einem wässrigen Dielektrikum ist es vorteilhaft, die Impulsbreiten und/oder die Impulsamplituden aufeinanderfolgender Gleichstromimpulse unterschiedlicher Stromrichtung so zu wählen, daß der mittlere Impulsstrom an der Bearbeitungseinheit zu Null wird. Dadurch werden elektrolytische Reaktionen und die damit einhergehenden unerwünschten Ablagerungen der sog. "weißen Schicht" am Werkstück und anderen metallischen Bauteilen der Erosionsvorrichtung weitgehend verhindert.

Bei bestimmten Erosionsbedingungen kann es vorteilhaft sein, die Bearbeitungseinheit mit Impulspaketen, bestehend aus mehr als zwei aufeinanderfolgenden Impulsen umgekehrter Polarität bzw. Stromrichtung zu beaufschlagen. Dies ist vor allem bei sehr hohen Impulsströmen und der damit einhergehenden starken Ionisierung der Entladungsstrecke von Vorteil.

Zur Erzeugung der beschriebenen Impulsformen eignet sich vorzugsweise ein Impulsgenerator mit folgender Schaltungsanordnung: einer Brückenschaltung, in deren Querzweig die Bearbeitungseinheit und in deren Längszweige jeweils wenigstens ein durch eine gemeinsame Steuereinrichtung steuerbarer Leistungsschalter, insbesondere ein Leistungs-MOSFET liegt, wobei wenigstens eine Gleichspannungsquelle parallel zur Brückenschaltung oder eine Spannungsquelle in Reihe zur geerdeten Brückenschaltung angeordnet ist. Je nach Stellung der Leistungsschalter wird die Brückensschaltung wahlweise in der einen oder in der anderen Brückendiagonale durchflossen. Durch gleichzeitiges Umschalten gegenüberliegender Schalterpaare ist die Stromrichtung der Impulse in der Bearbeitungseinheit beliebig umkehrbar. Auf diese Weise kann der Impulsgenerator die gewünschte Stromrichtungs- bzw. Polaritätscharakteristik der Bearbeitungsimpulse den jeweiligen Erosionsbedingungen anpassen.

Um die technologischen Kenngrößen der Impulse weiter zu beherrschen, werden vorzugsweise folgende schaltungstechnische Maßnahmen vorgeschlagen:

Jeder der steuerbaren Leistungsschalter ist mit einer eigenen Versorgungsquelle zum Betreiben seiner Steuerelektrode ausgestattet. Hierdurch wird verhindert, daß sich die Steuerbefehle der Leistungsschalter in irgendeiner ungünstigen Weise gegenseitig beeinflussen. Impulstransformatoren im Versorgungs- und Steuerungpfad der Leistungsschalter sorgen für eine störungsfreie Übertragung der Steuerbefehle auf die jeweiligen Leistungsschalter. Vorzugsweise sind im Querzweig der Brückenschaltung mehrere parallel geschaltete, steuerbare Strombegrenzungsstufen mit Widerständen und/oder Induktivitäten vorgesehen, welche durch die gemeinsame Steuereinrichtung der Bearbeitungseinheit zu- bzw. abschaltbar sind. Auf diese Weise wird die gewünschte Impulsamplitude aufeinanderfolgender Impulse eingestellt.

Weitere Vorteile und Ausgestaltungen der Erfindung ergeben sich aus der nachfolgenden Beschreibung bevorzugter Ausführungsbeispiele. In der Beschreibung wird auf die beifügte Schematische Zeichnung bezug genommen. In der Zeichnung zeigen:
- Fig. 1: ein Diagramm über den Verlauf des Abtrages am Werkstück bzw. an der Elektrode als Funktion der Impulsbreite von Stromimpulsen bei konstanter Impulsamplitude, und zwar für unterschiedliche Polung von Werkstück und Elektrode;
- Fig. 2: ein Diagramm über den Verlauf der maximal zulässigen Impulsbreite als Funktion der Impulsamplitude;
- Fig. 3: ein Diagramm mit Stromimpulsen wechselnder Stromrichtung mit unterschiedlicher Impulsbreite und der resultierende Spannungsverlauf am Erosionsspalt;
- Fig. 4: ein Diagramm mit Stromimpulsen wechselnder Stromrichtung mit gleicher Impulsbreite und der resultierende Spannungsverlauf am Erosionsspalt;
- Fig. 5: ein Regelkreis zur Ermittlung der optimal zulässigen Impulsbreite aufeinanderfolgender Impulse unterschiedlicher Stromrichtung; und
- Fig. 6: eine Schaltungsanordnung zur Erzeugung der in Fig. 3 und 4 dargestellten Stromverläufe.

Es sei an dieser Stelle vorsorglich darauf hingewiesen, daß in der nachfolgenden Beschreibung die Bezeichnung "Stromimpulse wechselnder Stromrichtung" selbstverständlich gleichbedeutend ist mit "Spannungsimpulse wechselnder Polarität".

Nach einer vorteilhaften Ausführung des Erosionsverfahrens wird die - aus Werkstück und Elektrode einer Erosionsvorrichtung bestehende - Bearbeitungseinheit mit unmittelbar aufeinanderfolgenden Gleichstromimpulsen unterschiedlicher Stromrichtung beaufschlagt. Für eine vorgegebene Stromstärke bzw. Impulsamplitude ist die Impulsbreite der Gleichstromimpulse so kurz gewählt, daß keine Impulspause zwischen den Impulsen benötigt wird. Die maximal zulässige Impulsbreite tmax, unterhalb welcher die Impulspause ohne Entartung des Erosionsprozesses entfallen kann, wird experimentell ermittelt: dabei wird die Impulsbreite der Stromimpulse bei konstanter Impulsamplitude schrittweise verkürzt und gleichzeitig die Neigung zur Entartung des Erosionsprozesses beobachtet. Hierzu wird beispielsweise die Erosionsspannung einer Bearbeitungseinheit laufend überwacht. Überschreitet diese einen vorgegebenen Wert oder findet eine Zündung der Entladung ohne erhebliche Zündverzögerung statt, ist dies ein Anzeichen für die Entartung des Erosionsprozesses. Bleibt die Entartung bei fortschreitender Verkürzung der Impulsbreite aufeinanderfolgender Stromimpulse aus, ist die Grenze der maximal zulässigen Impulsbreite tmax erreicht, bei der ohne Impulspause gearbeitet werden kann.

Der Wert tmax wird dann als Funktion der spezifischen Erosionsparameter in einer CNC-Steuerung der Erosionsvorrichtung gespeichert und vorzugsweise automatisch auf einen nach bestimmten Kriterien optimierten Wert topt eingestellt.

Bei geeigneter Wahl der Impulsbreiten t aufeinanderfolgender Stromimpulse, vorzugsweise Gleichstromimpulse, (im Bereich t ≤ tmax ) erreicht das erfindungsgemäße Erosionsverfahren eine erhebliche Steigerung der Abtragsrate gegenüber herkömmlichen Verfahren: anstatt nach jedem Stromimpuls bestimmter Stromrichtung eine "abtragslose" Impulspause einzuschalten, folgt unmittelbar ein weiterer Gleichstromimpuls umgekehrter Stromrichtung, der genauso zum Abtrag beiträgt wie sein unmittelbar vorhergehender Gleichstromimpuls. Die Abträge aufinanderfolgender Gleichstromimpulse unterschiedlicher Stromrichtung addieren sich demnach.

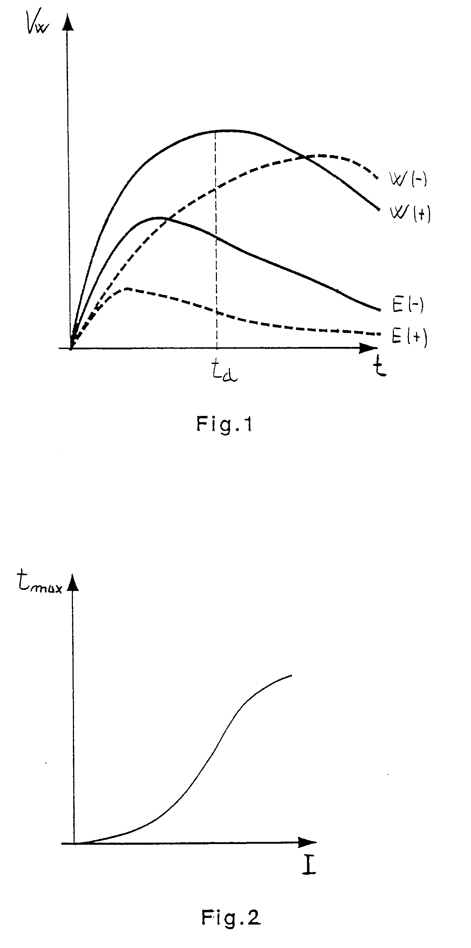

Dies soll anhand des Diagramms in Fig. 1 veranschaulicht werden. Dort ist ein typischer Abtragsverlauf Vw an einem Werkstück, z.B. aus Kupfer, und an einer Elektrode, z.B. aus Stahl, als Funktion der Impulsbreite t monopolarer Gleichstromimpulse für zwei Stromrichtungen bei konstanter Stromstärke aufgetragen: die durchgezogenen Linien veranschaulichen den Abtragsverlauf bei positiv gepoltem Werkstück W(+) und negativ gepolter Elektrode E(-); die gestrichelten Linien geben hingegen den Abtragsverlauf bei negativ gepoltem Werkstück W(-) und positiv gepolter Elektrode E(+) an.

Beim herkömmlichen Drahterodieren wird die Bearbeitungseinheit beispielsweise mit monopolaren Gleichstromimpulsen der in Fig. 1 mit durchgezogenen Linien dargestellten Polarität beaufschlagt. Dabei wird bekanntlich ein maximaler Abtrag am Werkstück angestrebt. Der Abtrag an der Drahtelektrode (Elektrodenverschleiß) spielt eine untergeordnete Rolle, da die Drahtelektrode regelmäßig erneuert wird. Daher wird für die Impulsbreite der monopolaren Gleichstromimpulse ein Wert td in dem Bereich des maximalen Werkstückabtrages gewählt. Zwischen zwei aufeinanderfolgenden Stromimpulsen muß beim bekannten Verfahren jedoch eine Impulspause eingeschaltet werden, um den Entladungskanal zu entionisieren.

Beim erfindungsgemäßen Ausführungsbeispiel werden aufeinanderfolgende Gleichstromimpulse unterschiedlicher Stromrichtung mit derart kurzen Impulsbreiten gewählt, daß die Impulspause entfallen kann. Anstatt nach jedem Impuls "negativer" Polarität eine Impulspause einzusetzen, schließt sich unmittelbar ein Stromimpuls "positiver" Polarität an. Wird in Fig. 1 im Bereich kurzer Impulsbreiten die Impulspause durch einen nachfolgenden Stromimpuls umgekehrter Stromrichtung ersetzt, so kann der Abtrag am Werkstück und an der Elektrode beinahe verdoppelt werden.

Der Bereich zulässiger Impulsbreiten wird durch die maximal zulässige Impulsbreite tmax begrenzt, die im allgemeinen erheblich kürzer ist als die in herkömmlichen Verfahren eingesetzten Impulsbreiten monopolarer Stromimpulse.

Anhand des Abtragsverlaufes in Fig. 1 kann die Impulsbreite t im Bereich zulässiger Impulsbreiten t ≤ tmax für spezifische Erosionsparameter, z.B. Materialpaarung von Werkstück und Elektrode, Dielektrikum, etc., mit Rücksicht auf die gewünschten Erosionsergebnissen optimiert werden: Die Impulsbreite kann z.B. beim Drahterodieren oder bei Spezialanwendungen der Senkerosion, wie dem elektroerosiven Bohren so gewählt werden, daß der Gesamtabtrag am Werkstück, also die Summe der Abträge aufeinanderfolgender Gleichstromimpulse, maximal wird - und zwar für eine vorgegebene Oberflächenrauheit, die bekanntlich von der Höhe des Impulsstromes abhängt. Gleichzeitig sollte der Gesamtabtrag an der Elektrode (Elektodenverschleiß) einen, z.B. durch die Bruchgrenze einer Drahtelektrode, vorgegebenen Wert nicht überschreiten. Die hieraus resultierende optimal zulässige Impulsbreite topt bestimmt dann die Frequenz der Stromimpulse. Für andere Fälle, z.B. beim erfindungsgemäßen Senkerodieren, kann die Impulsbreite im Bereich t ≤ tmax anhand Fig. 1 auch so gewählt werden, daß der Elektodenverschleiß minimal ist oder der sog. relative Verschleiß, d.h. das Verhältnis zwischen dem Elektrodenverschleiß und dem Werkstücksabtrag einen vorgegebenen Wert nicht überschreitet.

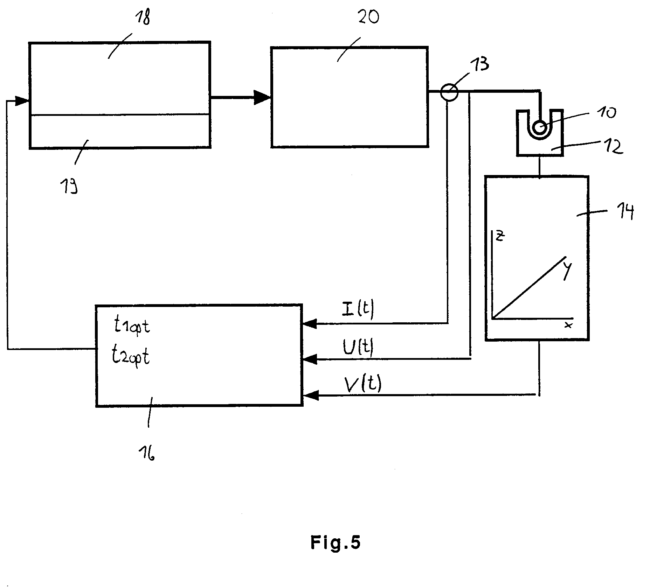

Fig. 5 zeigt einen Regelkreis zur automatischen Optimierung der zulässigen Impulsbreite aufeinanderfolgender Gleichstromimpulse anhand des Abtragsverlaufes in Fig. 1. Dabei ist eine Meßvorrichtung 13, 14 zur Überwachung des Erosionsvorganges vorgesehen, welche die Ist-Meßwerte des Erosionsstromes I(t), der Erosionsspannung U(t) und der Erosionsgeschwindigkeit bzw. Vorschubgeschwindigkeit V(t) an der - aus einer Elektrode 10 und dem Werkstück 12 bestehenden - Bearbeitungseinheit einer Senkerosionsvorrichtung laufend ermittelt. Die letztgenannte Erosionsgeschwindigkeit V(t) liefert ein Lageregler 14, welcher den Vorschub des Werkstückes 12 in x,y,z-Richtung gegenüber der Elektrode 10 steuert. Diese Meßwerte werden einem Fuzzy-Regler 16 eingespeist, der daraus zunächst Informationen über den Abtrag an dem Werkstück 12 und der Senkelektrode 10 gewinnt und die Impulsbreite aufeinanderfolgender Gleichstromimpulse - bei vorgegebenen Impulsamplituden - anhand og. Kriterien im "Fuzzy-Logik" Verfahren optimiert. Die optimal zulässigen Impulsbreiten t1opt, t2opt werden dann von einer Generatorsteuerung 18 empfangen und dort in einem Speicher 19 als Funktion der spezifischen Erosionsparameter, wie Stromstärke, Zusammensetzung des Dielektrikums, Elektrodenmaterial, Werkstückmaterial etc., abgelegt. Zu Beginn der elektroerosiven Bearbeitung eines Werkstückes werden die optimal zulässigen Impulsbreiten und dazugehörigen Impulsamplituden je nach Erosionsbedingung aus der Generatorsteuerung 18 automatisch ausgewählt und einer Endstufe 20 übergeben, welche die Bearbeitungseinheit 10, 12 mit Gleichstromimpulsen der ausgewählten Parameter beaufschlagt.

Bisher wurde die Stromstärke bzw. Impulsamplitude der Bearbeitungsimpulse in Abhängigkeit von der angestrebten Oberflächenrauhigkeit als vorgegeben vorausgesetzt. Bei steigender Stromstärke I und damit einhergehender zunehmender Oberflächenrauheit steigt in der Regel auch die maximal zulässige Impulsbreite tmax, z.B. nach dem in Fig. 2 gezeigten Kurvenverlauf.

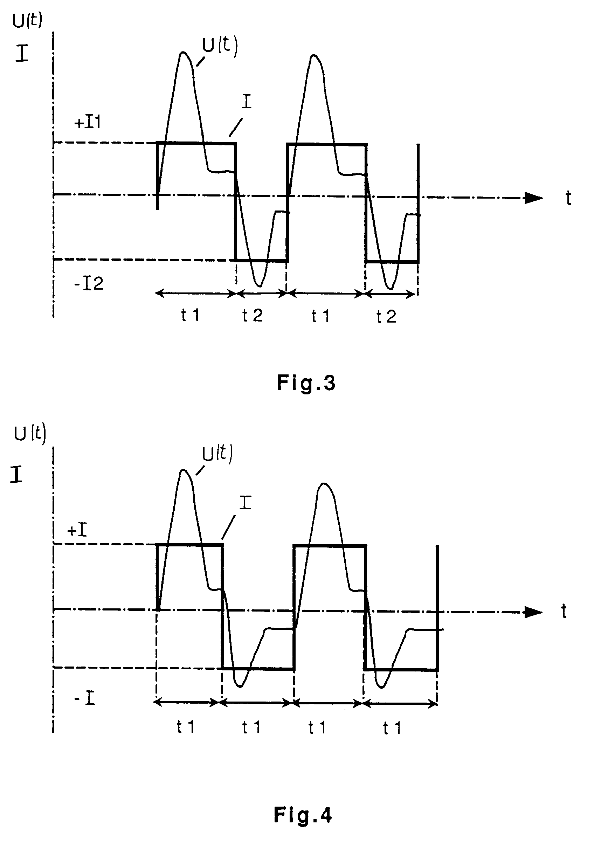

Die optimalen Impulsbreiten aufeinanderfolgender Gleichstromimpulse umgekehrter Stromrichtung sind im allgemeinen nicht gleich. Fig. 3 zeigt beispielsweise einen zeitlichen Stromverlauf I des erfindungsgemäßen Verfahrens, wobei die Bearbeitungseinheit mit aufeinanderfolgenden Gleichstromimpulsen unterschiedlicher Impulsbreite t1, t2 und unterschiedlicher Impulsamplitude +I1, -I2 beaufschlagt wird. Während der Zeit t1 tritt ein "positiver" Stromimpuls der Ampiltude I1 auf, dem unmittelbar ein "negativer" Stromimpuls der Amplitude I2 und der Zeitdauer t2 mit umgekehrter Stromrichtung folgt. Daraufhin wiederholt sich dieser Zyklus, beginnend mit dem "positiven" Stromimpuls der Impulsdauer t1.

Fig. 4 zeigt einen weiteren Stromverlauf I, mit dem die Bearbeitungseinheit beaufschlagt wird, wobei "positive" und "negative" Gleichstromimpulse mit derselben Impulsbreite t1 und derselben Impulsamplitude +I, -I unmittelbar aufeinander folgen.

In den Figuren 3 und 4 ist zur Veranschaulichung auch der Verlauf der an Bearbeitungseintheit resultierenden Spannung U(t) - mit dünner Linie - eingezeichnet. Die Spannung U(t) über der Funken- bzw. Entladungsstrecke zwischen dem Werkstück und der Elektrode nimmt je nach dem Stadium der Entladung und dem damit einhergehenden Zustand des Entladungskanals verschiedene Formen und Ist-Werte an. Wie bereits ausgeführt, werden diese Werte z.B. ständig gemessen und obigem Regler 16 zur weiteren Auswertung eingespeist.

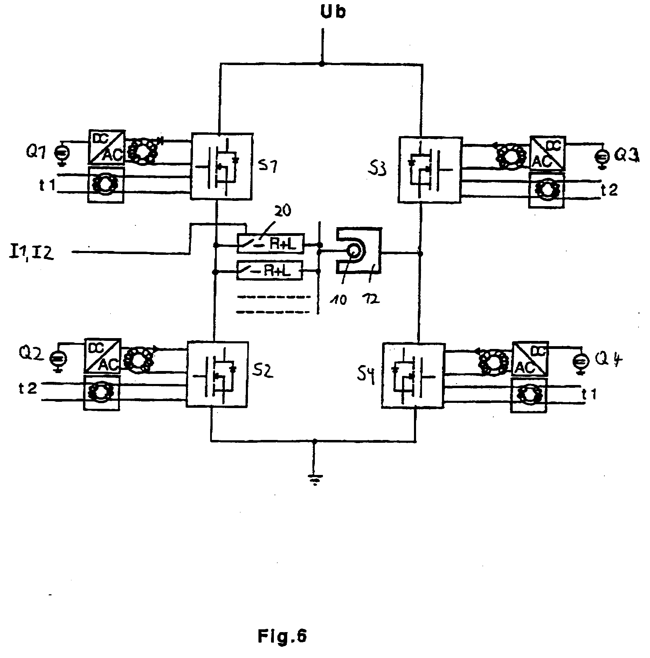

Fig. 6 zeigt ein bevorzugte Schaltungsvariante zur Erzeugung der in Fig. 3 und 4 dargestellten Stromverläufe I: Bei diesem Ausführungsbeispiel ist die - aus einer Elektrode 10 und einem Werkstück 12 bestehende - Bearbeitungseinheit im Querzweig einer Brückenschaltung angeordnet. In den Längszweigen der Brückenschaltung befindet sich jeweils ein Leistungsschalter S1, S2, S3, S4. Die Leistungsschalter S1 bis S4 sind über eine - hier nicht dargestellte - gemeinsame Steuereinrichtung (der in Fig. 5 mit Bezugszeichen 18 gekennzeichneten Art) schaltbar, welche die Werte der Impulsbreiten t1, t2 aufeinanderfolgender Stromimpuls vorgibt. Jedem der Leistungsschalter S1 bis S4 ist eine eigene Versorgungsquelle Q1 bis Q4 zugeordnet, um die Steuerelektrode der Leistungsschalter S1 bis S4 ohne gegenseitige Beeinflussung zu schalten. In der Schaltung von Fig. 6 sind ferner Impulstransformatoren im Versorgungs- und Steuerpfad der Leistungsschalter S1 bis S4 vorgesehen, die für eine störungsfreie Übertragung der Versorgungs- und Steuersignale der Leistungsschalter S1 bis S4 sorgen.

Eine positive Gleichspannungsquelle Ub liefert die Versorgungsspannung für obige Brückenschaltung, die in Reihe zwischen der Gleichspannungsquelle Ub und einem Erdpotentialanschluß liegt.

Außerdem sind im Querzweig der Brückenschaltung, genauer in der Zuleitung zur Elektrode 10, mehrere - parallel zueinander angeordnete - steuerbare Strombegrenzungsstufen 20, bestehend aus Widerständen R und Induktivitäten L vorgesehen, die jeweils über einen Schalter durch die gemeinsame Steuereinrichtung mit der Bearbeitungseinheit verbindbar sind. Durch wahlweises Zu- bzw. Abschalten einer oder meherer Strombegrenzungsstufen 20 im Querzweig der Brückenschaltung wird die Amplitude aufeinanderfolgender Stromimpulse auf den gewünschten Wert eingestellt, z.B. auf die Werte I1 und I2 des Stromverlaufes in Fig. 3.

Im Betriebszustand liefert die vorliegende Schaltung durch periodisches Öffnen bzw. Schließen der Leistungsschalter S1 bis S4 sowie der Strombegrenzungsstufen 20 z.B. den in Fig. 3 dargestellten Stromverlauf: während der Impulsdauer t1 des "positiven" Impulses sind die Leistungsschalter S2 und S3 leitend, die Leistungsschalter S1 und S4 gesperrt. Der Impulsstrom fließt dann von der Spannungsquelle Ub über den Leistungsschalter S3 durch die Bearbeitungseinheit 10, 12 und über den Leistungsschalter S2 zur Erde, und zwar mit einer Impulsaplitude I1, die von der Schalterstellung der Strombegrenzungsstufen 20 abhängt. Nach Ablauf der Impulsdauer t1 werden die Leistungsschalter S1 bis S4 paarweise gleichzeitig so umgeschaltet, daß für eine Impulsdauer t2 die Leistungsschalter S2 und S3 gesperrt und die Leistungsschalter S1 und S4 leitend sind. Gleichzeitig wird die Schalterstellung der Strombegrenzungsstufen 20 verändert, um eine Impulsampitude I2 für den "negativen" Impuls einzustellen. Der Impulsstrom fließt jetzt durch die zweite Brückendiagonale, nämlich von der Spannungsquelle Ub über den Leistungsschalter S1, durch die Bearbeitungseinheit 10, 12 und über den Leistungsschalter S4 zum Erdpotential. Sodann beginnt ohne Impulspause ein neuer Zyklus mit dem "positiven" Impuls t1, I1.

## Patentansprüche

1. Verfahren zum elektroerosiven Bearbeiten von Werkstücken mittels Impulsen wechselnder Stromrichtung bzw. Polarität, dadurch gekennzeichnet, daß die Impulsbreite aufeinanderfolgender Impulse unterschiedlicher Stromrichtung bzw. Polarität mindestens so kurz gewählt wird, daß die Impulspause zwischen aufeinanderfolgenden Impulsen bis auf den Wert Null reduzierbar ist.

2. Verfahren nach Anspruch 1, dadurch gekennzeichnet, daß zur Bestimmung der Entartungsgefahr die Erosionsspannung (U(t)) an der - aus Werkstück (10) und Elektrode (12) bestehenden - Bearbeitungseinheit (10, 12) auf ein etwaiges Abfallen unterhalb eines kritischen Wertes und/oder der Zündvorgang auf ein etwaiges Ausbleiben der Zündverzögerung hin überwacht wird.

3. Verfahren nach Anspruch 1 oder 2, dadurch gekennzeichnet, daß die zulässige Impulsbreite (topt) aufeinanderfolgender Impulse so gewählt wird, daß der Werkstücksabtrag maximal ist und/oder der Elektrodenverschleiß einen vorgegebenen Wert nicht überschreitet.

4. Verfahren nach Anspruch 3, dadurch gekennzeichnet, daß
- die Erosionsspannung (U(t)), der Erosionsstrom (I(t)) und/oder die Erosionsgeschwindigkeit (V(t)) an der Bearbeitungseinheit (10, 12) laufend erfaßt und
- daraus die Impulsbreite (topt) in einem Fuzzy-Regler (16) mit Rücksicht auf den maximalen Werkstücksabtrag und/oder den vorgegebenen Elektrodenverschleiß optimiert wird.

5. Verfahren nach einem der vorstehenden Ansprüche, dadurch gekennzeichnet, daß die maximal zulässige Impulsbreite (tmax) und/oder die optimal zulässige Impulsbreite (topt) als Funktion der spezifischen Erosionsparameter, in einer Steuereinrichtung (18), insbesondere einer CNC-Steuerung, gespeichert (19) und dort wahlweise abgerufen wird/werden.

6. Verfahren nach einem der vorstehenden Ansprüche, dadurch gekennzeichnet, daß die Bearbeitungseinheit (10, 12) mit unmittelbar aufeinanderfolgenden Gleichstromimpulsen unterschiedlicher Stromrichtung beaufschlagt wird.

7. Verfahren nach Anspruch 6, dadurch gekennzeichnet, daß die Impulsbreite und/oder die Impulsamplitude aufeinanderfolgender Gleichstromimpulse gleich groß gewählt wird.

8. Verfahren nach Anspruch 6, dadurch gekennzeichnet, daß die Impulsbreite und/oder die Impulsamplitude aufeinanderfolgender Gleichstromimpulse so gewählt wird, daß der mittlere Impulsstrom verschwindet.

9. Verfahren nach einem der Ansprüche 1 bis 5, dadurch gekennzeichnet, daß die Bearbeitungseinheit (10, 12) mit Wechselstromimpulsen beaufschlagt wird.

10. Verfahren nach einem der vorstehenden Ansprüche, dadurch gekennzeichnet, daß die Bearbeitungseinheit (10, 12) mit Impulspaketen bestehend aus mehr als zwei aufeinanderfolgenden Impulsen umgekehrter Stromrichtung bzw. Polarität beaufschlagt wird.

11. Impulsgenerator zur Erzeugung von Impulsen wechselnder Stromrichtung bzw. Polarität für eine Vorrichtung zum elektroerosiven Bearbeiten von Werkstücken, dadurch gekennzeichnet, daß eine Steuereinrichtung (19, 20) zur Steuerung der Impulsform aufeinanderfolgender Impulse unterschiedlicher Stromrichtung bzw. Polarität einen Regelkreis (13, 14, 16, 18, 20) zur Bestimmung der maximal zulässigen Impulsbreite (tmax) aufweist, bei welcher die Impulspause aufeinanderfolgender Impulse bis auf den Wert Null reduzierbar ist.

12. Impulsgenerator nach Anspruch 11, dadurch gekennzeichnet, daß der Regelkreis eine Meßvorrichtung aufweist zur Überwachung der Erosionsspannung (U(t)) an der - aus Werkstück (10) und Elektrode (12) bestehenden - Bearbeitungseinheit (10, 12) auf ein etwaiges Abfallen unterhalb eines kritischen Wertes und/oder des Zündvorganges auf ein etwaiges Ausbleiben der Zündverzögerung hin.

13. Impulsgenerator nach Anspruch 11 oder 12, dadurch gekennzeichnet, daß der Regelkreis zur automatischen Optimierung der zulässigen Impulsbreite (topt) mit Rücksicht auf den maximalen Werkstücksabtrag und/oder den Elektrodenverschleiß unterhalb eines vorgegebenen Wertes ausgelegt ist.

14. Impulsgenerator nach Anspruch 13, dadurch gekennzeichnet, daß der Regelkreis aufweist:
- eine Meßvorrichtung zur Erfassung der Erosionsspannung (U(t)), des Erosionsstromes (I(t)) und/oder der Erosionsgeschwindigkeit (V(t)) an der Bearbeitungseinheit (10, 12); und
- einen - der Meßvorrichtung nachgeschalteten - Fuzzy-Regler (16) zur automatischen Optimierung der zulässigen Impulsbreite (topt).

15. Impulsgenerator nach einem der Ansprüche 11 bis 14, gekennzeichnet durch die Steuereinrichtung (18), insbesondere CNC-Steuerung, zur automatischen Auswahl der maximal zulässigen Impulsbreite (tmax) und/oder der optimal zulässigen Impulsbreite (topt) aufeinanderfolgender Impulse als Funktion der spezifischen Erosionsparameter.

16. Impulsgenerator nach Anspruch 15, dadurch gekennzeichnet, daß die Steuereinrichtung (18) einen Speicher (19) aufweist zur Speicherung der maximal zulässigen Impulsbreite (tmax) und/oder der optimal zulässigen Impulsbreite (topt) als Funktion der spezifischen Erosionsparameter.

17. Impulsgenerator nach einem der Ansprüche der 11 bis 16, gekennzeichnet durch eine Brückenschaltung in deren Querzweig die Bearbeitungseinheit (10, 12) und in deren Längszweige jeweils wenigstens ein steuerbarer Leistungsschalter (S1 bis S4), insbesondere Leistungs-MOSFET, liegt, wobei wenigstens eine Gleichspannungsquelle parallel zur Brückenschaltung oder eine Spannungsquelle (+U) in Reihe zur geerdeten Brückenschaltung angeordnet ist.

18. Impulsgenerator nach Anspruch 17, dadurch gekennzeichnet, daß den Leistungsschaltern (S1 bis S4) jeweils eine Versorgungsquelle (Q1 bis Q4) zugeordnet ist.

19. Impulsgenerator nach Anspruch 17 oder 18, gekennzeichnet durch Impulstransformatoren (T1 bis T4) zur Signalübertragung an die Leistungsschalter (S1 bis S4).

20. Impulsgenerator nach einem der Ansprüche 17 bis 19, dadurch gekennzeichnet, im Querzweig der Brückenschaltung mehrere steuerbare Strombegrenzungsstufen (20), insbesondere mit Widerständen (R) und/oder Induktivitäten (L) zu- bzw. abschaltbar sind

## Claims

1. A method for the electrical discharge machining of workpieces by means of pulses of alternate current direction and polarity,
**characterised in that** the pulse width of consecutive pulses of varying current direction and polarity is selected to be at least short enough so that the pulse separation between consecutive pulses can be reduced to the value zero.

2. A method according to Claim 1,
**characterised in that** to determine the degeneration risk the erosion voltage (U(t)) is monitored at the machining unit (10, 12) - consisting of tool (10) and electrode (12) - for any drop beneath a critical value and/or the triggering operation is monitored for any absence of the triggering delay.

3. A method according to Claim 1 or 2,
**characterised in that** the permissible pulse width (topf) of consecutive pulses is selected so that the workpiece removal is maximal and/or the electrode wear does not exceed a preset value.

4. A method according to Claim 3,
**characterised in that**
- the erosion voltage (U(t)), the erosion current (I(t)) and/or the erosion speed (V(t)) are routinely recorded at the machining unit (10, 12) and
- therefrom the pulse width (topt) is optimised in a fuzzy controller (16) in view of the maximum workpiece removal and/or the preset electrode wear.

5. A method according to one of the preceding Claims,
**characterised in that** the maximum permissible pulse width (tmax) and/or the optimal permissible pulse width (topt) is/are stored (19) as a function of the specific erosion parameters, in a control mechanism (18), in particular a computerised numerical control, and are selectively retrieved there.

6. A method according to one of the preceding Claims,
**characterised in that** the machining unit (10, 12) is supplied with directly consecutive direct current pulses of varying current direction.

7. A method according to Claim 6,
**characterised in that** the pulse width and/or the pulse amplitude of consecutive direct current pulses is selected to be the same size.

8. A method according to Claim 6,
**characterised in that** the pulse width and/or the pulse amplitude of consecutive direct current pulses is selected so that the mean pulse current vanishes.

9. A method according to one of Claims 1 to 5,
**characterised in that** the machining unit (10, 12) is supplied with alternating current pulses.

10. A method according to one of the preceding Claims,
**characterised in that** the machining unit (10, 12) is supplied with pulse packets consisting of more than two consecutive pulses of reverse current direction and polarity.

11. A pulse generator for generating pulses of alternate current direction and polarity respectively for a device for the electrical discharge machining of workpieces,
**characterised in that** a control mechanism (19, 20) for controlling the pulse shape of consecutive pulses of varying current direction and polarity comprises a closed-loop control circuit (13, 14, 16, 18, 20) for determining the maximum permissible pulse width (tmax), in which the pulse separation of consecutive pulses can be reduced to the value zero.

12. A pulse generator according to Claim 11,
**characterised in that** the closed-loop control circuit comprises a measuring device for monitoring the erosion voltage (U(t)) at the machining unit (10, 12) - consisting of workpiece (10) and electrode (12) - for any drop beneath a critical value and/or for monitoring the triggering operation for any absence of the triggering delay.

13. A pulse generator according to Claim 11 or 12,
**characterised in that** the closed-loop control circuit for the automatic optimisation of the permissible pulse width (topt) is designed with regard to the maximum workpiece removal and/or the electrode wear beneath a preset value.

14. A pulse generator according to Claim 13,
**characterised in that** the closed-loop control circuit comprises:
- a measuring device for recording the erosion voltage (U(t)), the erosion current (I(t)) and/or the erosion speed (V(t)) at the machining unit (10, 12); and
- a fuzzy controller (16) - connected after the measuring device - for the automatic optimisation of the permissible pulse width (topt).

15. A pulse generator according to one of Claims 11 to 14,
**characterised by** the control mechanism (18), in particular a computerised numerical control, for the automatic selection of the maximum permissible pulse width (tmax) and/or the optimal permissible pulse width (topt) of consecutive pulses as a function of the specific erosion parameters.

16. A pulse generator according to Claim 15,
**characterised in that** the control mechanism (18) comprises a memory (19) for storing the maximum permissible pulse width (tmax) and/or the optimal permissible pulse width (topt) as a function of the specific erosion parameters.

17. A pulse generator according to one of Claims 11 to 16,
**characterised by** a bridge circuit, in the transverse branch of which the machining unit (10, 12) lies and in the longitudinal branches of which at least one controllable power switch (S1 to S4), in particular power MOS transistors, lies in each case, with at least one direct voltage source being disposed parallel to the bridge circuit or one voltage source (+U) being disposed in series with the earthed bridge circuit.

18. A pulse generator according to Claim 17,
**characterised in that** a supply source (Q1 to Q4) is associated with each of the power switches (S1 to S4).

19. A pulse generator according to Claim 17 or 18,
**characterised by** pulse transformers (T1 to T4) for the transmission of signals to the power switches (S1 to S4).

20. A pulse generator according to one of Claims 17 to 19,
**characterised in that** several controllable current limiting stages (20), in particular having resistors (R) and/or inductors (L), can be switched on or off in the transverse branch of the bridge circuit.

## Revendications

1. Procédé d'usinage par électroérosion de pièces à l'aide d'impulsions ayant des sens alternés de courant ou des polarités alternées, caractérisé en ce que la durée d'impulsions successives ayant des sens de courant différents ou des polarités différentes est choisie au moins suffisamment brève pour que la pause entre des impulsions successives puisse être réduite à la valeur zéro.

2. Procédé selon la revendication 1, caractérisé en ce que pour la détermination d'un risque de dégénérescence, un contrôle de la tension d'érosion (U(t)) est exécuté au niveau de l'unité d'usinage (10, 12) - constituée par la pièce (10) et l'électrode (12) - pour déterminer si elle tombe éventuellement au-dessous d'une valeur critique et/ou le processus d'amorçage est contrôlé pour déterminer s'il subsiste éventuellement un retard d'amorçage.

3. Procédé selon la revendication 1 ou 2, caractérisé en ce que la largeur admissible (topt) d'impulsions successives est choisie de telle sorte que l'enlèvement de matière dans la pièce est maximum et/ou l'usure des électrodes ne dépasse pas une valeur prédéterminée.

4. Procédé selon la revendication 3, caractérisé en ce que
- la tension d'érosion (U(t)), le courant d'érosion (I(t)) et/ou la vitesse d'érosion (V(t)) sont détectés en permanence au niveau de l'unité d'usinage (10, 12), et
- à partir de là, la largeur (topt) des impulsions est optimisée dans un régulateur flou (16) en tenant compte de l'enlèvement maximum de matière sur la pièce et/ou de l'usure prédéterminée des électrodes.

5. Procédé selon l'une des revendications précédentes, caractérisé en ce que la largeur maximale admissible (tmax) des impulsions et/ou la largeur optimale admissible (topt) des impulsions est/sont mémorisée(s) (19) dans un dispositif de commande (18), notamment une unité de commande numérique CNC, est/sont appelée(s) au choix dans cette mémoire.

6. Procédé selon l'une des revendications précédentes, caractérisé en ce que l'unité d'usinage (10, 12) est chargée par des impulsions de courant continu, qui se succèdent directement et ont des sens de courant différents.

7. Procédé selon la revendication 6, caractérisé en ce que la durée et/ou l'amplitude d'impulsions successives de courant continu est choisie identique.

8. Procédé selon la revendication 6, caractérisé en ce que la durée et/ou l'amplitude d'impulsions successives de courant continu est choisie de telle sorte que le courant moyen des impulsions s'annule.

9. Procédé selon l'une des revendications 1 à 5, caractérisé en ce que l'unité d'usinage (10, 12) est chargée par des impulsions de courant alternatif.

10. Procédé selon l'une des revendications précédentes, caractérisé en ce que l'unité d'usinage (10, 12) est chargée par des paquets d'impulsions constitués par plus de deux impulsions successives ayant des sens de courant inverses ou des polarités inverses.

11. Générateur d'impulsions pour la production d'impulsions ayant des sens de courant alternés ou des polarités alternées pour un dispositif pour l'usinage de pièces par électroérosion, caractérisé en ce qu'un dispositif de commande (19, 20) possède, pour la commande de la forme d'impulsions successives ayant des sens de courant différents et des polarités différentes, un circuit de régulation (13, 14, 16, 18, 20) servant à déterminer la durée maximale admissible (tmax) des impulsions, pour laquelle la durée entre des impulsions successives peut être réduite à la valeur zéro.

12. Générateur d'impulsions selon la revendication 11, caractérisé en ce que le circuit de réglage comporte un dispositif de mesure servant à vérifier si la tension d'érosion (U(t)) au niveau de l'unité d'usinage (10, 12) - constituée par la pièce (10) et l'électrode (12) - tombe éventuellement au-dessous d'une valeur critique et/ou si le processus d'amorçage présente une éventuelle absence de retardement d'amorçage.

13. Générateur d'impulsions selon la revendication 11 ou 12, caractérisé en ce que le circuit de réglage est conçu pour réaliser l'optimisation automatique de la largeur admissible des impulsions (topt) compte tenu de l'enlèvement maximum de matière sur la pièce et/ou de l'usure de l'électrode au-dessous d'une valeur prédéterminée.

14. Générateur d'impulsions selon la revendication 13, caractérisé en ce que le circuit de réglage contient :
- un dispositif de mesure pour détecter la tension d'érosion (U(t)), le courant d'érosion (I(t)) et/ou la vitesse d'érosion (V(t)), sont détectés en permanence au niveau de l'unité d'usinage (10, 12), et
- un régulateur flou (16) - branché en aval du dispositif de mesure - pour l'optimisation automatique de la largeur admissible (topt) des impulsions.

15. Générateur d'impulsions selon l'une des revendications 11 à 14, caractérisé par le dispositif de commande (18), notamment l'unité de commande numérique CNC, pour la sélection automatique de la largeur maximale admissible d'impulsions (tmax) et/ou la largeur optimale admissible (topt) des impulsions successives en fonction des paramètres spécifiques d'érosion.

16. Générateur d'impulsions selon la revendication 15, caractérisé en ce que le dispositif de commande (18) comporte une mémoire (19) pour mémoriser la largeur maximale admissible (tmax) des impulsions et/ou la largeur optimale admissible (topt) des impulsions en fonction des paramètres spécifiques d'érosion.

17. Générateur d'impulsions selon l'une des revendications 11 à 16, caractérisé par un circuit en pont, dans la branche transversale duquel est disposée l'unité d'usinage (10, 12) et dans la branche longitudinale duquel sont disposés respectivement au moins un interrupteur de puissance commandable (S1 à S4), notamment un transistor MOSFET de puissance, au moins une source de tension continue étant branchée en parallèle avec le circuit en pont, ou une source de tension (+U) étant branchée en série avec le circuit en pont mis à la terre.

18. Générateur d'impulsions selon la revendication 17, caractérisé en ce qu'une source d'alimentation (Q1 à Q4) est associée respectivement aux interrupteurs de puissance (S1 à S4).

19. Générateur d'impulsions selon la revendication 71 ou 18, caractérisé par des transformateurs d'impulsions (T1 à T4) servant à transmettre des signaux aux interrupteurs de puissance (S1 à S4).

20. Générateur d'impulsions selon l'une des revendications 17 à 19, caractérisé en ce que plusieurs étages commandables (20) de limitation du courant, comportant notamment des résistances (R) et/ou des inductances (L) peuvent être branchés ou débranchés dans la branche transversale du circuit en pont.
